(19) **Europäisches Patentamt European Patent Office Office européen des brevets**

(11) **EP 4 544 251 B1**

(12) **EUROPEAN PATENT SPECIFICATION**

(45) Date of publication and mention
of the grant of the patent:
**04.03.2026 Bulletin 2026/10**

(21) Application number: **23730786.3**

(22) Date of filing: **05.06.2023**

(51) International Patent Classification (IPC):
**F28D 9/00** $^{(2006.01)}$        **F28F 3/04** $^{(2006.01)}$

(52) Cooperative Patent Classification (CPC):
**F28D 9/0043; F28D 9/005; F28F 3/046;**
F28F 2275/04

(86) International application number:
**PCT/EP2023/064903**

(87) International publication number:
**WO 2023/247160 (28.12.2023 Gazette 2023/52)**

(54) **PLATE HEAT EXCHANGER**

PLATTENWÄRMETAUSCHER

ÉCHANGEUR DE CHALEUR À PLAQUES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.06.2022 SE 2250767**

(43) Date of publication of application:
**30.04.2025 Bulletin 2025/18**

(73) Proprietor: **Alfa Laval Corporate AB**
**221 00 Lund (SE)**

(72) Inventors:
• **ROMLUND, Jens**
  **257 34 RYDEBÄCK (SE)**
• **KNUTSSON, Axel**
  **226 47 LUND (SE)**
• **SÁNCHEZ MOLINERO, David**
  **211 47 MALMÖ (SE)**
• **SJÖDIN, Per**
  **223 61 LUND (SE)**
• **SKOGLÖSA, Anders**
  **253 60 RAMLÖSA (SE)**
• **UPPMAN, Erik**
  **226 51 LUND (SE)**
• **WALTER, Kristian**
  **247 99 GENARP (SE)**

(74) Representative: **Alfa Laval Attorneys**
**Alfa Laval Corporate AB**
**Group Patent**
**P.O. Box 73**
**221 00 Lund (SE)**

(56) References cited:
**EP-B1- 3 017 261      KR-Y1- 200 437 768
US-B2- 9 933 214**

## Description

TECHNICAL FIELD

The invention relates to a plate heat exchanger. In particular, the invention relates to a plate heat exchanger as defined in the preamble of claim 1, and as illustrated in KR 200 437 768 Y.

BACKGROUND

WO 2011/162659 discloses a plate exchanger comprising several heat exchanger plates provided beside each other, which form first plate interspaces and second plate interspaces in an alternating order. Every second heat exchanger plate forms a primary plate and every second a secondary plate. Each heat exchanger plate extends in an extension plane and comprises a heat transfer area and an edge area around the heat transfer area. The heat transfer area comprises a corrugation of ridges and valleys, which each extends in a longitudinal direction. The ridges have two edge surfaces and a support surface between the edge surfaces and with a first width transversally to the longitudinal direction. The valleys have two edge surfaces and a support surface between the edge surfaces and with a second width transversally to the longitudinal direction. The support surface of the valleys of the primary plates slopes in relation to the extension plane and the support surface of the ridges of the secondary plates slopes in relation to the extension plane.

In the plate heat exchanger of WO 2011/162659, the ridges and valleys of the primary plate extend across the ridges and valleys of the secondary plate. Since the support surfaces of the valleys and ridges slope in relation to the extension plane, contact points with a small area are formed at the intersections of the ridges and valleys of the primary and secondary plates.

Besides the concept of the sloped support surfaces, WO 2011/162659 also discloses the common arrangement of the longitudinal directions of ridges and valleys of adjacent plates crossing each other. Thus, numerous individual contact points are created over the heat transfer areas where the plates are permanently joined with each other e.g., by brazing with a copper or nickel based brazing material.

US 4915165 discloses a plate heat exchanger, the heat exchanger plates of which have been provided by pressing with a corrugation pattern comprising ridges and valleys, the ridges and valleys of adjacent plates extend in parallel. In each plate interspace the ridges of adjacent plates abut against each other such that the opposing valleys form parallel flow passages in the plate interspace. The ridges of at least some of the heat exchanger plates are provided with depressions, which form thresholds in the valleys formed on the opposite sides of the plates by the ridges. Thresholds of this kind are formed in the heat exchanger plates such that they create a substantially larger flow resistance in the plate interspace for one heat exchange medium than in the plate interspaces for the other heat exchange medium.

The ridges and valleys of each plate of the plate heat exchanger of US 4915165 are arranged in a main direction along the heat exchanger plate i.e., along a longitudinal extension of the plate. Although US 4915165 mentions the possibility of permanently connecting the heat exchanger plates with each other by soldering or welding, the invention is discussed in the context of plate heat exchangers being provided with gaskets between adjacent heat exchanger plates of the plate heat exchanger. Accordingly, the character and placement of joints between adjacent heat transfer plates in a soldered or welded embodiment of the plate heat exchanger is not discussed in US 4915165.

SUMMARY

It would be advantageous to achieve a plate heat exchanger with securely joined heat transfer plates. In particular, it would be desirable to provide a plate heat exchanger comprising strong joints between the heat transfer plates over their respective heat transfer surfaces. To better address one or more of these concerns, a plate heat exchanger having the features defined in the independent claim is provided.

According to an aspect, there is provided a plate heat exchanger comprising a plate package of permanently joined heat transfer plates. Each of a first heat transfer plate and an adjoining second heat transfer plate of the plate package comprises a first end portion, a centre portion and a second end portion arranged in succession along a longitudinal axis of the respective heat transfer plate, the first end portion being provided with at least one porthole, the second end portion being provided with at least one porthole, and the centre portion comprising a heat transfer area provided with a heat transfer pattern. The heat transfer pattern comprises ridges and groove portions, top portions of the ridges extending in a first plane and bottom portions of the groove portions extending in a second plane, which first and second planes are parallel to each other and form outer limits of the heat transfer pattern in a direction perpendicularly to the longitudinal axis. The ridges are interrupted by intermediate sections extending at a different level than the first plane and/or the groove portions are interrupted by intermediate sections extending at a different level than the second plane. The ridges extend along a number of ridge lines and the groove portions extend along a number of groove lines, the ridge lines and the groove lines being arranged alternatingly and extending in parallel. In the heat transfer area, the first heat transfer plate is permanently joined to the second heat transfer plate in a number of joints along the ridge lines of the first heat transfer plate and the groove lines of the second heat transfer plate. For each joint of the number of joints a quotient between a circumference, O, of the joint and an area, A, of the joint is O/A $\geq$ 2.6 mm$^{-1}$.

Since in the heat transfer area, the first heat transfer plate is permanently joined to the second heat transfer plate in the number of joints along the ridge lines of the first heat transfer plate and the groove lines of the second heat transfer plate, and since for each joint of the number of joints the quotient between the circumference, O, of the joint and an area, A, of the joint is O/A $\geq$ 2.6 mm$^{-1}$ - the joints arranged along the ridge and groove lines are configured in a particularly favourable manner from a strength perspective of the joints. These strong joints are provided in the heat transfer areas of the first and second heat transfer plates. Thus, a plate heat exchanger with the intended strength properties is achieved.

Since the number of joints between the first and second heat transfer plates in the heat transfer area extend along the ridge and groove lines, individual joints of the number of joints have a length along the ridge and groove lines. That is, individual joints of the number of joints have a length along the ridge and groove lines which is longer than a width across the ridge and groove lines. For instance, individual joints of the number of joints may have an oval shape, a shape of a superellips with a convex circumference, or a substantially rectangular shape.

It has been realised by the inventor that the length of the joints between two permanently joined heat transfer plates are more important than the areas of the joints. Upon examination of traditional joints of substantially circular shape between heat transfer plates that have been subjected to load, it has been seen that in cross sections of the joints, the joints are elongated more at peripheries of the joints than at the centre of the joints. Accordingly, the peripheries of the joints have locally been subjected to higher load at their peripheries than at their centres.

The inventor has realised that by providing elongated joints, the length of the peripheries of the joints are increased in comparison with circular joints with the same area. Thus, the load is distributed over a long periphery, which is subjected to less load per length unit than in a circular joint. Accordingly, the inventor has realised that an efficient joining of the heat transfer plates is provided by ensuring that the joints are long in comparison with their width, which may be defined by the quotient between the circumference, O, of the joint and an area, A, of the joint. With relevant sized joints for a plate heat exchanger of common size the quotient is O/A $\geq$ 2.6 mm$^{-1}$.

In comparison with WO 2011/162659, longer and thus, stronger joints are provided between two adjacent heat transfer plates in the present plate heat exchanger.

In WO 2011/162659, due to the crossing of the ridges and valleys, the joints formed between two adjacent plates provide only spot-shaped contact points. In order to increase the strength of the bond between the two adjacent plates, the number of contact points between two adjacent plates would have to be increased. Such a measure would require increasing the number of valley and ridges, which will reduce the distance between the two adjacent plates and accordingly, this would change the flow properties for heat transfer fluids through the heat exchanger considerably.

Herein, the plate heat exchanger may alternatively be referred to simply as heat exchanger.

Herein the heat transfer plates may be referred to as plates. In the technical field, the heat transfer plates may also be referred to as heat exchanger plates or heat exchange plates.

Each of the heat transfer plates may have a generally rectangular shape seen perpendicularly to the first and second planes.

A main part of the heat transfer plates, such as all heat transfer plates, in the plate package may be of the same kind as the first and second heat transfer plates.

If not all heat transfer plates are of the same kind, at least the heat transfer pattern of all the heat transfer plates may be the same.

The plate heat exchanger is arranged for heat exchange between at least two fluids. Two fluids flow on opposite sides of each of the heat transfer plates through the plate package. Interspaces between the heat transfer plates are flowed through by the fluids.

At least one of the fluids flows in and out of the plate package through porthole channels formed by the at least one porthole at each of the first and second end portions and corresponding portholes in the other heat transfer plates. Further fluids may also flow in and out of the plate package via further porthole channels formed by portholes in the heat transfer plates. Alternatively, alternate interspaces between the plates are open from sides of the plate package such that one of the fluids can flow in a direction across the longitudinal axis through the plate package.

Together with portholes of adjacent heat transfer plates, the at least one porthole in the first end portions of the first and second heat transfer plates, form a porthole channel extending through the plate package perpendicularly to the longitudinal axis. Similarly, together with portholes of the adjacent heat transfer plates, the at least one porthole in the second end portions of the first and second heat transfer plates, form a porthole channel extending through the plate package perpendicularly to the longitudinal axis.

An interspace formed between the first and second heat transfer plates in the plate package may be arranged in fluid communication with the above discussed two porthole channels. Alternatively, the interspace between the first and second heat transfer plates may be arranged in fluid communication with two further porthole channels. The further porthole channels being formed by further portholes in the first and second end portions of the first and second heat transfer plates and portholes of adjacent heat transfer plates in the plate package.

A further alternative may be for the interspace between the first and second heat transfer plates to be open from the sides of the plates. In the latter case, the portholes in the first and second end portions of the first and second heat transfer plates form porthole channels with adjacent heat transfer plates. Such formed porthole channels are in fluid communication with interspaces formed between the first and second heat transfer plates and the adjacent heat transfer plates.

During use of the plate heat exchanger, heat transfer between two media, such as two fluids or heat transfer fluids, takes mainly place via the heat transfer area of the respective heat transfer plates. The number of heat transfer plates and the size and shape of the heat transfer areas of the respective plates provide a certain heat exchange capacity for certain flow rates of the fluids flowing through the heat exchanger.

A general shape of the heat transfer area of the heat transfer plates is defined by the ridges and groove portions as discussed above. Within this general shape various alterations are foreseen to adapt a particular heat exchanger to a certain heat exchange capacity, such as e.g., altering the distance between the ridges and groove portions, altering the distance between the first and second planes, altering the lengths of the intermediate sections, etc.

The ridges of the first heat transfer plate and the groove portions of the second heat transfer plate abut against each other in the heat transfer area along the ridge lines of the first heat transfer plate and the groove lines of the second heat transfer plate. In a corresponding manner the ridges and groove portions of further heat transfer plates of the plate package abut against each other along ridge and groove lines.

The abutment between the ridges and groove portions of adjacent heat transfer plates along ridge and groove lines forms channels in the interspace formed between the plates. Put differently, due to the abutment between the ridges and groove portions of adjacent heat transfer plates along ridge and groove lines in the heat transfer area, the interspace between the first and second plates is formed by channels extending in parallel.

In the interspace between the first and second heat transfer plates, the intermediate sections of the ridges and the intermediate sections of the groove portions provide for a fluid passing through the interspace to flow between the channels formed by the abutment between the ridges and groove portions of the first and second heat transfer plates. For instance, this may contribute to the fluid passing over the entire heat transfer area and/or for adapting a flow resistance in the interspace.

The ridge lines may be lines along which the ridges of a heat transfer plate extend. The ridge lines may be e.g., straight or have a serrated shape, such as a zigzag shape. The ridge lines may be interrupted by the intermediate sections. The ridge lines extend in parallel along the heat transfer area of the heat transfer plate.

Similarly, the groove lines may be lines along which the groove portions of the heat transfer plate extend. The groove lines may be e.g., straight or have a serrated shape, such as a zigzag shape. The groove lines may be interrupted by the intermediate sections. The groove lines extend in parallel along the heat transfer area of the heat transfer plate.

In the heat transfer areas of adjacent heat transfer plates, the ridges of one plate abut against groove portions of the adjacent plate along respective ridge and groove lines. That is, in the heat transfer area, the ridges and groove portions of adjacent plates do not cross each other.

The ridges and groove portions of the heat transfer plates together with the respective intermediate sections of the ridges and the groove portions form the heat transfer pattern. The heat transfer pattern may provide a desired flow resistance for the heat transfer fluids, and/or may promote turbulence in the heat transfer fluids and thus, may provide a certain heat transfer capacity of the relevant plate heat exchanger during use of the plate heat exchanger.

Joints may be formed by a joining method in which the plates are subjected to a heat lower than the melting point of the heat transfer plates. Such joining methods may be one of brazing with an added brazing material in the form of a foil, a paste, or a powder comprising e.g., copper or nickel, or joining by means of the material of the heat transfer plates by application of a melting depressant composition applied to the heat transfer plates prior to being heated e.g., as discussed in WO 2013144211.

According to embodiments, the first and second heat transfer plates may be of a same kind. In the plate package, the second heat transfer plate may be rotated in parallel with the first and second planes 180 degrees in relation to the first heat transfer plate. In this manner, at least a portion of the plate package may include one kind of heat transfer plates only. This facilitates the manufacturing of the plates included in the plate package.

Remaining heat transfer plates of the plate package may be arranged in the same manner adjacent to each other i.e., rotated in parallel with the first and second planes 180 degrees in relation to the adjacent heat transfer plates.

According to embodiments, a portion of each intermediate section of the ridges extends at a level of the second plane, and/or wherein a portion of each intermediate section of the groove portions extends at a level of the first plane. In this manner, openings having a height of the distance between the first and second planes may be formed by the intermediate sections. The openings fluidly connect adjacent channels formed by the abutting ridges and groove portions within the interspaces between two adjacent heat transfer plates, such as between the first and second heat transfer plates.

According to embodiments, the top portions or the ridges may be broader in the first plane than the bottom portions of the groove portions are in the second plane, or the bottom portions of the groove portions may be broader in the second plane than the top portions of the ridges are in the first plane. In this manner, a narrow width of the joints of number of joints may be achieve. Moreover, in this manner, it may be ensured that the ridges of one plate will abut against the groove portions of an adjacent plate. The abutment may thus, be achieved even with certain imprecisions in the lateral positioning of the ridges and groove portions of the heat transfer pattern of adjacent plates.

According to embodiments, in the first end portion, the first and second heat transfer plates may be joined by a first series of joints arranged at least partially circumferentially around the at least one porthole of the first end portion. In the second end portion, the first and second heat transfer plates may be joined by a second series of joints arranged at least partially circumferentially around the at least one porthole of the second end portion. The heat transfer pattern of the centre portion may be arranged immediately adjacent to, and extending between, the first and second series of joints. In this manner, a large portion of the heat transfer plate may be formed by the centre portion and accordingly, a large portion of heat transfer plate may form the heat transfer area. The heat transfer plate may thus, be utilised for optimum heat transfer.

According to embodiments, the ridge lines and the groove lines may extend along straight lines, and the ridge lines and the groove lines may extend at one or more angle/s within a range of 0 - 90 degrees to the longitudinal axis. In this manner, the ridges and groove portions may extend at a smaller or lesser angle to the general direction of at least one of the heat transfer fluids intended to flow through the plate heat exchanger substantially in parallel with the longitudinal axis. Accordingly, a flow resistance for the at least one heat transfer fluid may be adapted inter alia by the angle of the ridge and groove lines to the longitudinal axis.

Further features of, and advantages with, the invention will become apparent when studying the appended claims and the following detailed description.

## BRIEF DESCRIPTION OF THE DRAWINGS

Various aspects and/or embodiments of the invention, including its particular features and advantages, will be readily understood from the example embodiments discussed in the following detailed description and the accompanying drawings, in which:

Figs. 1a and 1b illustrate a plate heat exchanger according to embodiments,
Figs. 2a and 2b show a heat transfer plate according to embodiments,
Figs. 3a and 3b illustrate cross sectional and perspective views of three heat transfer plates of a plate package of a plate heat exchanger according to embodiments,
Fig. 4 schematically illustrates a cross sectional shape of a joint,
Fig. 5a illustrates a top view of a heat transfer plate according to embodiments,
Fig. 5b illustrates a cross sectional and perspective view of two heat transfer plates, and
Fig. 6 illustrates a cross section through a first and a second heat transfer plate according to embodiments.

## DETAILED DESCRIPTION

Aspects and/or embodiments of the invention will now be described more fully. Like numbers refer to like elements throughout. Well-known functions or constructions will not necessarily be described in detail for brevity and/or clarity.

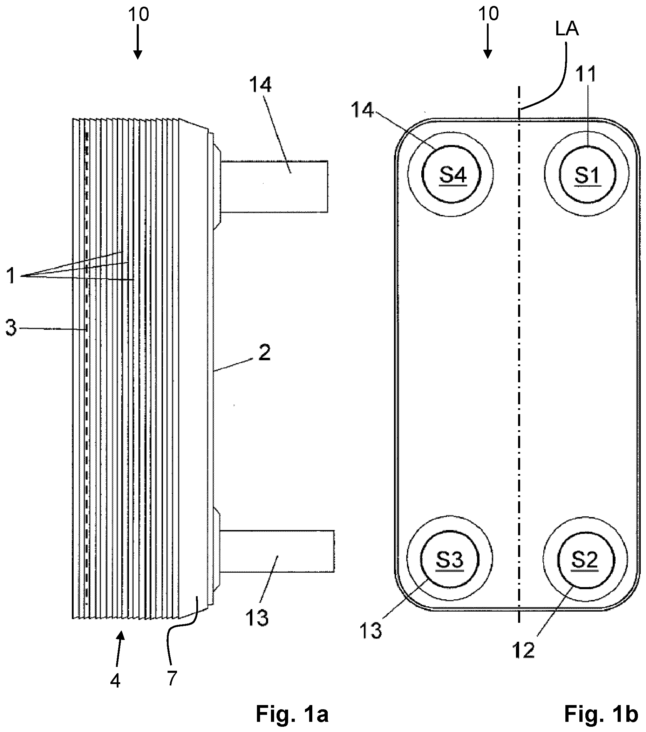

**Figs. 1a and 1b** illustrate a plate heat exchanger 10 according to embodiments.

The plate heat exchanger 10 comprises a plurality of heat transfer plates 1 in accordance with any of the embodiments discussed herein, a first end plate 2, which is provided beside an outermost one of the heat transfer plates 1, and a second end plate 3, which is provided beside an opposite outermost heat transfer plate 1. The second end plate 3 is not visible in the view of **Fig. 1a** since it is arranged within a flange 7 of the relevant outermost heat transfer plate 1. Thus, the second end plate 3 is indicated with a broken line in **Fig. 1a.** A longitudinal axis LA extends along a length of the plates 1.

The heat transfer plates 1 are produced through forming of sheet metal and arranged beside each other. The first end plate 2, the second end plate 3 and the heat transfer plates 1 are permanently joined to each other to form a plate package 4. Each heat transfer plate 1 comprises a flange 7 extending around the heat transfer plate 1. The flanges 7 of adjacent plates 1 may overlap and are permanently joined to each.

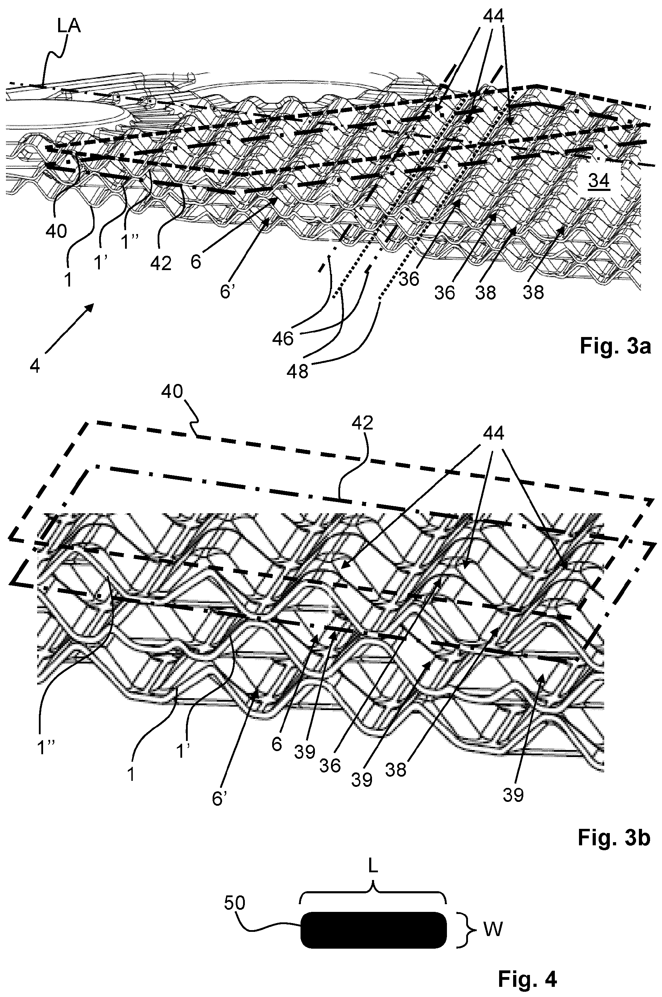

Within the plate package 4, adjacent heat transfer plates 1 delimit therebetween first plate interspaces for a first medium and second plate interspaces for a second medium, see e.g. **Figs. 3a and 3b.** The first and second media may be any suitable fluids, between which heat is to be transferred during use of the plate heat exchanger 10.

The plate heat exchanger 10 of the embodiments disclosed has four porthole channels S1, S2, S3 and S4 formed by portholes in the individual plates 1. The porthole channel S1 is connected to a connection pipe 11 and communicates with the first plate interspaces. The porthole channel S2 is connected to a connection pipe 12 and communicates with the first plate interspaces. The porthole channel S3 is connected to a connection pipe 13 and communicates with the second plate interspaces and the porthole channel S4 is connected to a connection pipe 14 and communicates with the second plate interspaces.

It is to be noted that the plate heat exchanger may have another number of porthole channels provided by a corresponding number of portholes of the heat transfer plates 1, than those disclosed, such as 2, 3, 5, 6, 7, or 8 porthole channels.

Connection pipes in fluid communication with the porthole channels may be provided extending from the first end plate 2, as disclosed, and/or from the second end plate 3.

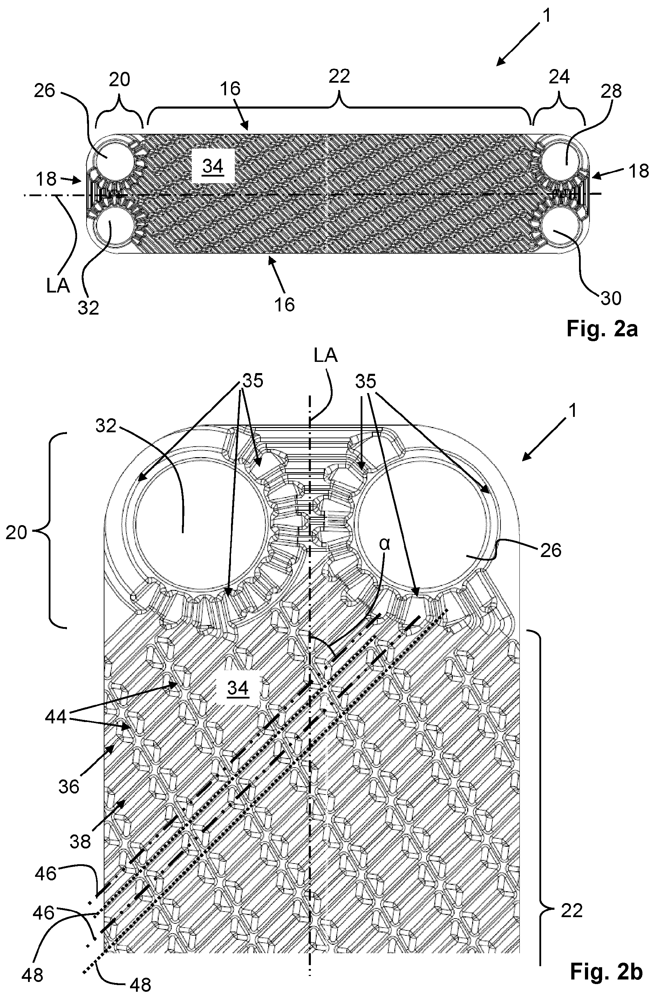

Figs. **2a and 2b** show a heat transfer plate 1 according to embodiments. Fig. 2a shows a top view of the entire plate 1 and Fig. 2b shows a top view of a portion of the plate 1. For sake of simplicity, a circumferential flange portion of the plate 1 has been omitted in Figs. **2a and** 2b.

The plate 1 is of a similar kind as the plates 1 of the plate heat exchanger 10 shown in Figs. **1a and** 1b. Accordingly, a plate heat exchanger may be assembled by permanently joining a number of the plates 1 shown in Figs. **2a and** 2b.

The heat transfer plate 1 has a rectangular shape with two long side edges 16 and two short side edges 18. A longitudinal axis LA extends in parallel with the long side edges 16 and transversely to the short side edges 18.

In a plate heat exchanger, the heat transfer plate 1 is permanently joined with adjacent heat transfer plates of the same or similar kind to form a plate package.

A first heat transfer plate 1 and an adjacent second heat transfer plate 1 of a plate package may be of a same kind. In the plate package, the second heat transfer plate may be rotated 180 degrees in relation to the first heat transfer plate, in a plane including the longitudinal axis LA and the long and two short side edges 16, 18. In this manner, the first and second plates 1 and further heat transfer plates 1 of the same kind may be utilised for forming at least a main portion of the plate package.

Each of the heat transfer plate 1 and further heat transfer plates of the plate package comprises a first end portion 20, a centre portion 22 and a second end portion 24 arranged in succession along the longitudinal axis LA of the respective heat transfer plate 1. The first end portion 20 is provided with at least one porthole 26, 32, the second end portion 24 is provided with at least one porthole 28, 30.

In these embodiments, each of the first and second end portions 20, 24 is provided with two portholes 26 - 32.

The centre portion 22 comprises a heat transfer area 34 provided with a heat transfer pattern. The heat transfer area 34 forms an area, at which during use of the plate heat exchanger, a main part of the heat transfer between first and second media on opposite sides of the plate 1 takes place.

In the respective first and second end portions 20, 24, each porthole 26 - 32 is surrounded by a porthole area 35, as exemplified at the first end portion 20 in Fig. 2b. In a known manner, the porthole areas 35 are shaped such that, within the heat exchanger and along the respective porthole channel, the heat transfer plates 1 abut against each other alternatingly in a sealing manner and in a manner defining through flow passages into or out of respective interspaces between the plates 1.

More specifically, in the respective porthole area 35 of the first and second end portions 20, 24, the heat transfer plates 1 are provided with protrusions and depressions configured to abut against corresponding protrusions and depressions of adjacent heat transfer plates 1. The portholes in the respective porthole areas 35 of each heat transfer plate 1 may be cut to different diameters or may be cut with different shapes in order to provide alternatingly open and sealed off interspaces between the plates 1 along each porthole channel.

Series of joints are arranged where such protrusions and depressions abut against each other. The joints are arranged at least partially circumferentially around the portholes 26 - 32 of the end portions 20, 24.

Again, in a known manner and mentioned as an example, the heat transfer plates 1 may be of the same kind. Within the plate package 4, the individual heat transfer plates 1 are stacked with every second heat transfer plate 1 rotated 180 degrees about an axis perpendicularly to a plane including the long and short side edges 16, 18 of the plate 1. Thus, the abutment and the sealing against each other in the porthole areas 35 to define the through flow passages into, and out of, the respective interspaces between the plates 1 may be achieved. Alternatively, other known ways of achieving the alternating sealing and through flow may be used e.g., by providing heat transfer plates 1 of more than one kind with accordingly shaped porthole areas.

The heat transfer area 34 of the centre portion 22 comprises a heat transfer pattern of alternatingly arranged ridges 36 and groove portions 38 extending in parallel with each other. Top portions of the ridges 36 extends in a first plane and bottom portions of the groove portions 38 extending in a second plane.

The ridges 36 are interrupted by intermediate sections 44 extending at a different level than the first plane. Additionally, or alternatively, the groove portions 38 are interrupted by corresponding intermediate sections (not shown) extending at a different level than the second plane. More specifically, the intermediate sections 44 form portions of the heat transfer pattern, which interrupt the ridges 36 and/or the groove portions 38, respectively.

The ridges 36 extend along a number of ridge lines 46 (indicated with dash-double-dotted lines) and the groove portions 38 extend along a number of groove lines 48 (indicated with dotted lines). The ridge lines 46 and the groove lines 48 are arranged alternatingly and extending in parallel in the heat transfer area 34.

See further below with reference to **Figs. 3a and 3b** concerning the arrangement of the ridges 36 and groove portions 38 of two adjacent plates 1 and the arrangement of the top portions of the ridges 36 extending in the first plane and the bottom portions of the groove portions 38 extending in the second plane.

According to some embodiments, such as the illustrated embodiments, and as clearly shown in Fig. 2b, the heat transfer pattern of the centre portion 22 is arranged immediately adjacent to, the porthole areas 35 i.e., the heat transfer pattern extends up to the protrusions and depressions of the respective porthole area 35 of the first and second end portions 20, 24 of the heat transfer plates 1. Thus, a large portion of the heat transfer plate 1 may be formed by the heat transfer area 34 that includes the heat transfer pattern.

More specifically, according to embodiments, in the first end portion 20 first and second heat transfer plates 1 may be joined by a first series of joints arranged at least partially circumferentially around the at least one porthole 26, 32 of the first end portion 20 and in the second end portion 24 the first and second heat transfer plates 1 may be joined by a second series of joints arranged at least partially circumferentially around the at least one porthole 28, 30 of the second end portion 24. The heat transfer pattern of the centre portion 22 may be arranged immediately adjacent to, and extending between, the first and second series of joints arranged at least partially circumferentially around the at least one porthole 26 - 32 of the first and second end portions 20, 24, respectively.

In these embodiments, the ridge lines 46 and the groove lines 48 extend along straight lines. The ridge lines 46 and the groove lines 48 extend at one or more angle/s $\alpha$ within a range of 0 - 90 degrees to the longitudinal axis LA. In **Fig. 2b,** the angle $\alpha$ is illustrated at approximately 45 degrees.

According to some embodiments, the ridge lines 46 and the groove lines 48 extend along straight lines with the ridge lines 46 and the groove lines 48 extending at one or more angle/s $\alpha$ within a range of >0 - 80 degrees to the longitudinal axis LA.

The size of the angle $\alpha$ will affecting a flow resistance for at least one heat transfer fluid flowing through interspaces between plates 1. The angle $\alpha$ may be selected for providing a desired flow resistance in a plate heat exchanger wherein the plates 1 form a plate package.

**Figs. 3a and 3b** illustrate cross sectional and perspective views of three heat transfer plates 1 of a plate package 4 of a plate heat exchanger according to embodiments. The cross sections extend along an edge portion of the plate package 4 such that interspaces 6 in between the plates 1 are shown in **Figs. 3a and 3b. Fig. 3b** shows a more close-up view of the cross section of **Fig. 3a.**

The plates 1 shown in **Figs. 3a and 3b** may be of the same kind as the plate 1 shown in **Figs. 2a and 2b.** The plate heat exchanger including the plates 1 of **Figs. 3a and 3b** may be of a similar kind to the plate heat exchanger 10 discussed above with reference to **Fig. 1.**

Accordingly, in the following reference is also made to **Figs. 1 - 2b.**

The plate package 4 of the plate heat exchanger comprises a number of permanently joined heat transfer plates 1.

Each of a first heat transfer plate 1' and an adjoining second heat transfer plate 1" of the plate package 4 comprises a first end portion 20, a centre portion 22, and a second end portion 24 as discussed above with reference to **Figs. 2a and 2b.** Note that in **Figs. 3a and 3b,** the second plate 1" is stacked on top of the first plate 1'.

Again, the first end portion is provided with at least one porthole, the second end portion (not shown in **Fig. 3a)** is provided with at least one porthole, and the centre portion comprises the heat transfer area 34 provided with the heat transfer pattern.

Again, the heat transfer pattern comprises ridges 36 and groove portions 38. Top portions of the ridges 36 extend in a first plane 40 (indicated with broken lines) and bottom portions of the groove portions 38 extend in a second plane 42 (indicated with dash-dotted lines). The first and second planes 40, 42 extend in parallel with each other and form outer limits of the heat transfer pattern in a direction perpendicularly to the longitudinal axis LA.

In the heat transfer area 34, the first heat transfer plate 1' is permanently joined to the second heat transfer plate 1" in a number of joints along the ridges 36 of the first heat transfer plate 1' and the groove portions 38 of the second heat transfer plate 1". In a similar manner, further heat transfer plates are joined along ridges and groove portions of adjacent heat transfer plates 1 throughout the plate package 4. Thus, within the plate package 4, adjacent heat transfer plates 1 delimit therebetween first plate interspaces 6 for a first medium and second plate interspaces 6' for a second medium.

The thus, formed interspaces 6, 6' are constituted by channels 39 extending between the first and second planes 40, 42, the channels 39 being formed between joined ridges 36 and groove portions 38 of adjacent heat transfer plates 1.

The ridges 36 are interrupted by intermediate sections 44 extending at a different level than the first plane 40 and/or the groove portions 38 are interrupted by intermediate sections extending at a different level than the second plane 42.

Due to the intermediate sections 44, during use of the heat exchanger, the fluid passing along an interspace 6, 6' between two plates 1, is able to flow between the channels 39.

A portion of each intermediate section 44 of the ridges 36 may extend at a level of the second plane 42, and/or a portion of each intermediate section of the groove portions 38 may extend at a level of the first plane 40.

The ridges 36 extend along a number of ridge lines 46 (indicated with dash-double-dotted lines in **Fig. 3a)** and the groove portions 38 extend along a number of groove lines 48 (indicated with dotted lines in **Fig. 3a).** The ridge lines 46 and the groove lines 48 are arranged alternatingly and extend in parallel.

In a corresponding manner, the ridges and groove portions of the remaining heat transfer plates 1 of the plate package 4 also extend along ridge and groove lines.

In **Figs. 3a and 3b** the ridges 36 and groove portions 38, the first and second planes 40, 42, and the ridge and groove lines 46, 48 are shown for the second heat transfer plate 1". Each of the first heat transfer plate 1' and the remaining heat transfer plates 1 of the plate package 4 has corresponding ridges and groove portions, first and second planes, and ridge and groove lines.

In the heat transfer area 34, the first heat transfer plate 1' is permanently joined to the second heat transfer plate 1" in a number of joints along the ridge lines 46 of the first heat transfer plate 1' and the groove lines 48 of the second heat transfer plate 1". That is, the ridges 36 of the first plate 1' are joined to the groove portions 38 of the second plate 1".

For each joint of the number of joints, a quotient between a circumference, O, of the joint and an area, A, of the joint is $O/A \geq 2.6 \text{ mm}^{-1}$.

As initially discussed, it has been found that joints with the quotient $O/A \geq 2.6 \text{ mm}^{-1}$ provide for strong joints and accordingly, a strong bond in the plate package 4, between heat transfer plates 1 in their heat transfer areas 34.

Since each of the joints of the number of joints extends along the ridge and groove lines 46, 48, individual joints of the number of joints have a length along the ridge and groove lines 46, 48. Also, individual joints of the number of joints have a length along the ridge and groove lines which is longer than a width across the ridge and groove lines. See further below with reference to **Fig. 4.**

According to embodiments, the permanently joined heat transfer plates 1 may be joined by joints comprising at least 50 wt% metal of the same kind as a metal of the heat transfer plates 1. In this manner, the joints may be formed in a method for joining the heat transfer plates 1 utilising a melting depressant composition for decreasing a melting temperature of the metal of the heat transfer plates.

The herein defined joints with the quotient $O/A \geq 2.6 \text{ mm}^{-1}$ lend themselves well for providing a strong bond between the heat transfer plates 1 with the joints comprising at least 50 wt% metal of the same kind as a metal of the heat transfer plates 1.

The joints may comprise at least 85 wt% metal of the same kind as the metal of the heat transfer plates 1, such as up to 100 wt% metal of the same kind as the metal of the heat transfer plates 1.

For instance, as discussed in WO 2013144211, the heat transfer plates 1 may be joined utilising a method for joining a first heat transfer plate 1' made of metal with a second heat transfer plate 1" made of the metal. The metal has a solidus temperature above 1100 °C. The method comprises:

- applying a melting depressant composition on surface portions of the first heat transfer plate 1', the melting depressant composition comprising boron, B, or a combination of boron, B, and silicon, Si, and
- bringing the second heat transfer plate 1" into contact with the melting depressant composition at a contact point on said surface.

The first and second heat transfer plates 1', 1" together with other similarly prepared plates of the plate heat exchanger are heated to a suitable temperature below the solidus temperature, which suitable temperature causes the metal of at least the first heat transfer plate 1' to melt at the surface portions where the melting depressant composition has been applied. When the plates are cooled, the melted metal solidifies and permanently joins the heat transfer plates 1.

According to embodiments, in the heat transfer area 34, the first heat transfer plate 1' may be permanently joined to the second heat transfer plate 1" only along the ridge lines 46 of the first heat transfer plate 1' and the groove lines 48 of the second heat transfer plate 1". In this manner, no other joints may be provided in the heat transfer area 34 of the respective first and second heat transfer plates 1', 1".

Turning **Figs. 3a and 3b** upside down will illustrate an embodiment of the plate package 4 wherein the ridges 36 form groove portions and consequently, the groove portions 38 form ridges. Such an embodiment comprises the groove portions interrupted by intermediate sections 44 similar to the intermediate sections 44 in the ridges 36 discussed above.

**Fig. 4** schematically illustrates a cross sectional shape of one joint 50 of the a number of joints along the ridge lines 46 of the first heat transfer plate 1' and the groove lines 48 of the second heat transfer plate 1", as discussed above with reference to **Figs. 3a and 3b.** Accordingly, in the following reference is also made to **Figs. 3a and 3b.**

The cross section of the joint 50 shown in **Fig. 4** is seen in a plane parallel with one of the first and second planes 40, 42.

According to embodiments, each joint 50 of the number of joints has a length, L, along the ridge lines 46 of the first heat transfer plate 1' and the groove lines 48 of the second heat transfer plate 1", which length, L, is longer than a width, W, of each joint 50 across the ridge lines 46 of the first heat transfer plate 1' and the groove lines 48 of the second heat transfer plate 1". In this manner, the quotient $O/A \geq 2.6 \text{ mm}^{-1}$ can be provided in joints 50 of suitable shape to be utilised in commercially produced plate heat exchangers.

Such shapes may include rectangular, substantially rectangular, oval (non-circular), and the shape of a superellips with a convex circumference.

According to embodiments, each joint of the number of joints may have a width, W, across the ridge lines 46 of the first heat transfer plate 1' and the groove lines 48 of the second heat transfer plate 1", which width, W, is within a range of $0.4 \leq W \leq 0.8$ mm. In this manner, the quotient $O/A \geq 2.6$ mm$^{-1}$ may be provided in joints 50 suitably formed to be utilised in commercially produced plate heat exchangers and with thermal properties of such plate heat exchangers provided for efficient heat transfer between two heat transfer fluids.

In the illustrated embodiments, the joint 50 has a rectangular cross section with rounded corners i.e., the cross section of the joint 50 is substantially rectangular and may be approximated with a rectangle having a length, L, along the relevant ridge 36 and abutting groove portion 38 and a width, W, transvers to the ridge 36 and the groove portion 38.

According to these embodiments, the circumference, O, is calculated:

$$O = 2 \times L + 2 \times W$$

and the area, A, is calculated:

$$A = L \times W.$$

Within joint sizes relevant for heat exchangers with permanently joined heat transfer plates 1, the quotient $O/A \geq 2.6$ mm$^{-1}$ in order to provide strong joints.

For instance, the quotient O/A may be within a range of $2,6$ mm$^{-1} \leq O/A \leq 5,4$ mm$^{-1}$ for joints 50 sizes within a length, L, within a range of 5 - 20 mm and a width, W, within a range of 0.4 - 0.8 mm. Mentioned purely as 4 examples, the joint 50 may have the following dimensions providing the following quotients:

    L = 5 mm, W = 0.4 mm, and O/A = 5.4 mm$^{-1}$;
    L = 10 mm, W = 0.5 mm, and O/A = 4.2 mm$^{-1}$;
    L = 10 mm, W = 0.8 mm, and O/A = 2.7 mm$^{-1}$;
    L = 20 mm, W = 0.8 mm, and O/A = 2.6 mm$^{-1}$.

In comparison, commonly sized circular joints of a plate heat exchanger of the prior art having a diameter of 2.5 mm provide a quotient O/A = 1.6 mm$^{-1}$ and joints having a diameter of 5 mm provide a quotient O/A = 0.8 mm$^{-1}$.

It is noted that for a circular joint to have a quotient $O/A \geq 2.6$ mm$^{-1}$, the joint must have a diameter smaller than 0.65 mm, which is not feasible in ordinarily sized plate heat exchangers.

As an alternative to the rectangular or substantially rectangular shape of the joint 50 shown in **Fig. 4,** a joint with e.g., an oval shape (non-circular) or a shape of a superellips with a convex circumference that has a length, L, along the ridge and groove lines 46, 48 which is longer than a width, W, across the ridge and groove lines 46, 48 may be utilised.

Also for such embodiments of joints, the quotient $O/A \geq 2.6$ mm$^{-1}$ provides for strong joints in a plate heat exchanger of relevant sizes.

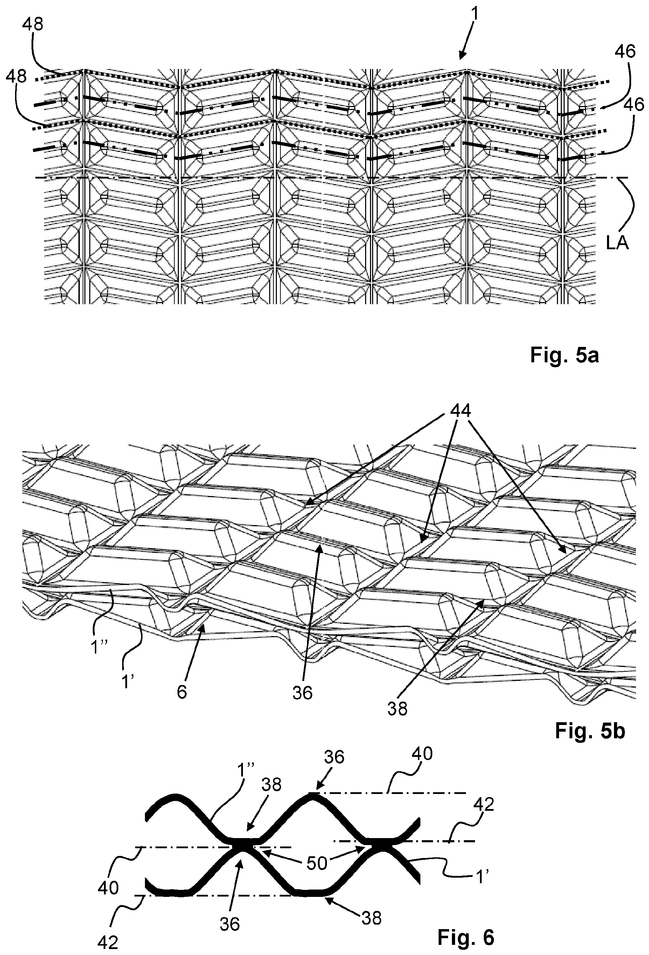

**Fig. 5a** illustrates a top view of a heat transfer plate 1 according to embodiments and **Fig. 5b** illustrates a cross sectional and perspective view of first and second heat transfer plates 1', 1" of a plate package of a plate heat exchanger according to embodiments. The cross section extends along an edge portion of the plate package such that an interspace 6 in between the plates 1 is shown. These embodiments resemble in much the embodiments of **Figs. 1** - **4.** Accordingly, in the following mainly the differences will be discussed.

Again, each of the heat transfer plates 1, 1', 1" comprises a heat transfer pattern comprising ridges 36 and groove portions 38. Top portions of the ridges 36 extend in a first plane and bottom portions of the groove portions 38 extend in a second plane. The ridges 36 extend along a number of ridge lines 46 and the groove portions 38 extend along a number of groove lines 48, the ridge lines 46 and the groove lines 48 being arranged alternatingly and extending in parallel.

According to these embodiments, the ridge lines 46 and the groove lines 48 extend along zigzag lines.

The zigzag lines 46, 48 may meander in parallel with the longitudinal axis LA as indicated in **Fig. 4a.** Alternatively, the zigzag lines 46, 48 may cross the longitudinal axis LA.

Again, the ridges 36 are interrupted by intermediate sections 44 extending at a different level than the first plane. Additionally, or alternatively, the groove portions 38 are interrupted by corresponding intermediate sections (not shown) extending at a different level than the second plane.

According to these embodiments, the intermediate sections 44 of the ridges 36 and/or the intermediate sections of the groove portions 38 are arranged at portions of the zigzag lines where they change direction.

**Fig. 6** illustrate a cross section through a first and a second heat transfer plate 1', 1" according to embodiments. The heat transfer plates 1', 1" may be heat transfer plates of a plate package included in any of the plate heat exchanger discussed above with reference to **Figs. 1** - **5b.** Accordingly, in the following reference is also made to **Figs. 1 - 5b.**

Again, each of the first and second heat transfer plates 1', 1" comprises a heat transfer pattern comprising ridges 36 and groove portions 38. Top portions of the ridges 36 extend in a first plane 40 and bottom portions of the groove portions 38 extend in a second plane 42.

According to these embodiments, the bottom portions of the groove portions 38 are broader in the second plane 42 than the top portions of the ridges 36 are in the first plane 40.

According to alternative embodiments, the top portions of the ridges may be broader in the first plane than the bottom portions of the groove portions are in the second plane, as could be illustrated by turning **Fig. 6** upside down.

In these embodiments, due to the broad bottom portions or broad top portions, it may be ensured that the ridges 36 of the first plate 1' and the groove portions 48 of the second plate 1" abut against each other and accordingly, it may be ensured that the joints 50 between the ridges 36 and the groove portions 38 are provided throughout the plate package. Also, due to the less broad top portions or less broad bottom portions, it may be ensured that the joints 50 have a narrow width, W.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A plate heat exchanger (10) comprising a plate package (4) of permanently joined heat transfer plates (1), wherein

   each of a first heat transfer plate (1') and an adjoining second heat transfer plate (1") of the plate package (4) comprises a first end portion (20), a centre portion (22) and a second end portion (24) arranged in succession along a longitudinal axis (LA) of the respective heat transfer plate (1), the first end portion (20) being provided with at least one porthole (26, 32), the second end portion (24) being provided with at least one porthole (28, 30), and the centre portion (22) comprising a heat transfer area (34) provided with a heat transfer pattern, wherein the heat transfer pattern comprises ridges (36) and groove portions (38), top portions of the ridges (36) extending in a first plane (40) and bottom portions of the groove portions (38) extending in a second plane (42), which first and second planes (40, 42) are parallel to each other and form outer limits of the heat transfer pattern in a direction perpendicularly to the longitudinal axis (LA), wherein the ridges (36) are interrupted by intermediate sections (44) extending at a different level than the first plane (40) and/or the groove portions (38) are interrupted by intermediate sections extending at a different level than the second plane (42), and wherein the ridges (36) extend along a number of ridge lines (46) and the groove portions (38) extend along a number of groove lines (48), the ridge lines (46) and the groove lines (48) being arranged alternatingly and extending in parallel, wherein

   in the heat transfer area (34), the first heat transfer plate (1') is permanently joined to the second heat transfer plate (1") in a number of joints (50) along the ridge lines (46) of the first heat transfer plate (1') and the groove lines (48) of the second heat transfer plate (1"), the plate heat exchanger being **characterized in that** for each joint (50) of the number of joints (50) a quotient between a circumference, O, of the joint (50) and an area, A, of the joint (50) is $O/A \geq 2.6$ mm$^{-1}$.

2. The plate heat exchanger (10) according to claim 1, wherein each joint (50) of the number of joints (50) has a length, L, along the ridge lines (46) of the first heat transfer plate (1') and the groove lines (48) of the second heat transfer plate (1"), which length, L, is longer than a width, W, of each joint (50) across the ridge lines (46) of the first heat transfer plate (1') and the groove lines (48) of the second heat transfer plate (1").

3. The plate heat exchanger (10) according to claim 1 or 2, wherein each joint (50) of the number of joints (50) has a width, W, across the ridge lines (46) of the first heat transfer plate (1') and the groove lines (48) of the second heat transfer plate (1"), which width, W, is within a range of $0.4 \leq W \leq 0.8$ mm.

4. The plate heat exchanger (10) according to any one of the preceding claims, wherein in the heat transfer area (34), the first heat transfer plate (1') is permanently joined to the second heat transfer plate (1") only along the ridge lines (46) of the first heat transfer plate (1') and the groove lines (48) of the second heat transfer plate (1").

5. The plate heat exchanger (10) according to any one of the preceding claims, wherein the first and second heat transfer plate (1', 1") are of a same kind, and wherein in the plate package (4), the second heat transfer plate (1") is rotated in parallel with the first and second planes 180 degrees in relation to the first heat transfer plate (1').

6. The plate heat exchanger (10) according to any one of the preceding claims, wherein a portion of each intermediate section (44) of the ridges (36) extends at a level of the second plane (42), and/or wherein a portion of each intermediate section of the groove portions (38) extends at a level of the first plane (40).

7. The plate heat exchanger (10) according to any one of the preceding claims, wherein the top portions of the ridges (36) are broader in the first plane (40) than the bottom portions of the groove portions (38) are in the second plane (42), or the bottom portions of the groove portions (38) are broader in the second plane (42) than the top portions of the ridges (36) are in the first plane (40).

8. The plate heat exchanger (10) according to any one of the preceding claims, wherein in the first end portion (20) the first and second heat transfer plate (1', 1") are joined by a first series of joints arranged at least partially circumferentially around the at least one porthole (26, 32) of the first end portion (20), wherein

in the second end portion (24) the first and second heat transfer plate (1', 1") are joined by a second series of joints arranged at least partially circumferentially around the at least one porthole (28, 30) of the second end portion (42), and wherein the heat transfer pattern of the centre portion (22) is arranged immediately adjacent to, and extending between, the first and second series of joints.

9. The plate heat exchanger (10) according to any one of the preceding claims, wherein the ridge lines (46) and the groove lines (48) extend along straight lines, and wherein the ridge lines (46) and the groove lines (48) extend at one or more angle/s ($\alpha$) within a range of 0 - 90 degrees to the longitudinal axis (LA).

10. The plate heat exchanger (10) according to any one of claims 1 - 8, wherein the ridge lines (46) and the groove lines (48) extend along zigzag lines.

11. The plate heat exchanger (10) according to claim 10, wherein the intermediate sections (44) of the ridges (36) and/or the intermediate sections of the groove portions (38) are arranged at portions of the zigzag lines where they change direction.

12. The plate heat exchanger (10) according to any one of the preceding claims, wherein the permanently joined heat transfer plates (1), are joined by joints (50) comprising at least 50 wt% metal of the same kind as a metal of the heat transfer plates (1).

**Patentansprüche**

1. Plattenwärmetauscher (10), umfassend ein Plattenpaket (4) aus dauerhaft verbundenen Wärmeübertragungsplatten (1), wobei

jede von einer ersten Wärmeübertragungsplatte (1') und einer angrenzenden zweiten Wärmeübertragungsplatte (1") des Plattenpakets (4) einen ersten Endabschnitt (20), einen Mittelabschnitt (22) und einen zweiten Endabschnitt (24) umfasst, die nacheinander entlang der Längsachse (LA) der jeweiligen Wärmeübertragungsplatte (1) angeordnet sind, wobei der erste Endabschnitt (20) mit mindestens einer Öffnung (26, 32) versehen ist, der zweite Endabschnitt (24) mit mindestens einer Öffnung (28, 30) versehen ist, und der Mittelabschnitt (22) eine Wärmeübertragungsfläche (34) umfasst, die mit einem Wärmeübertragungsmuster versehen ist, wobei das Wärmeübertragungsmuster Rippen (36) und Nutabschnitte (38) umfasst, wobei sich die oberen Abschnitte der Rippen (36) in einer ersten Ebene (40) erstrecken und die unteren Abschnitte der Nutabschnitte (38) in einer zweiten Ebene (42) erstrecken, wobei die erste und die zweite Ebene (40, 42) parallel zueinander verlaufen und die äußeren Begrenzungen des Wärmeübertragungsmusters in einer Richtung senkrecht zur Längsachse (LA) bilden, wobei die Rippen (36) durch Zwischenteilabschnitte (44) unterbrochen werden, die sich auf einer anderen Ebene als die erste Ebene (40) erstrecken, und/oder die Nutabschnitte (38) durch Zwischenteilabschnitte unterbrochen werden, die sich auf einer anderen Ebene als die zweite Ebene (42) erstrecken, wobei sich die Rippen (36) entlang einer Anzahl von Rippenlinien (46) erstrecken und die Nutabschnitte (38) sich entlang einer Anzahl von Nutlinien (48) erstrecken, wobei die Rippenlinien (46) und die Nutlinien (48) abwechselnd angeordnet sind und parallel verlaufen,
wobei im Wärmeübertragungsbereich (34) die erste Wärmeübertragungsplatte (1') dauerhaft mit der zweiten Wärmeübertragungsplatte (1") in einer Anzahl von Verbindungen (50) entlang der Rippenlinien (46) der ersten Wärmeübertragungsplatte (1') und der Nutlinien (48) der zweiten Wärmeübertragungsplatte (1") verbunden ist, wobei der Plattenwärmetauscher **dadurch gekennzeichnet ist, dass**
für jede Verbindung (50) der Anzahl von Verbindungen (50) ein Quotient zwischen einem Umfang O der Verbindung (50) und einer Fläche A der Verbindung (50) durch $O/A \geq 2{,}6$ mm$^{-1}$ gegeben ist.

2. Plattenwärmetauscher (10) nach Anspruch 1, wobei jede Verbindung (50) der Anzahl von Verbindungen (50) eine Länge L entlang der Rippenlinien (46) der ersten Wärmeübertragungsplatte (1') und der Nutlinien (48) der zweiten Wärmeübertragungsplatte (1") aufweist, wobei die Länge L größer ist als eine Breite W jeder Verbindung (50) quer zu den Rippenlinien (46) der ersten Wärmeübertragungsplatte (1') und den Nutlinien (48) der zweiten Wärmeübertragungsplatte (1").

3. Plattenwärmetauscher (10) nach Anspruch 1 oder 2, wobei jede Verbindung (50) der Anzahl von Verbindungen (50) eine Breite W quer zu den Rippenlinien (46) der ersten Wärmeübertragungsplatte (1') und den Nutlinien (48) der zweiten Wärmeübertragungsplatte (1") aufweist, wobei die Breite W im Bereich von $0{,}4 \le W \le 0{,}8$ mm liegt.

4. Plattenwärmetauscher (10) nach einem der vorstehenden Ansprüche, wobei im Wärmeübertragungsbereich (34) die erste Wärmeübertragungsplatte (1') nur entlang der Rippenlinien (46) der ersten Wärmeübertragungsplatte (1') und der Nutlinien (48) der zweiten Wärmeübertragungsplatte (1") dauerhaft mit der zweiten Wärmeübertragungsplatte (1") verbunden ist.

5. Plattenwärmetauscher (10) nach einem der vorstehenden Ansprüche, wobei die erste und die zweite Wärmeübertragungsplatte (1', 1") von gleicher Art sind und wobei in dem Plattenpaket (4) die zweite Wärmeübertragungsplatte (1") parallel zur ersten und zweiten Ebene um 180 Grad gegenüber der ersten Wärmeübertragungsplatte (1') gedreht ist.

6. Plattenwärmetauscher (10) nach einem der vorstehenden Ansprüche, wobei sich ein Abschnitt jedes Zwischenteilabschnitts (44) der Rippen (36) auf Höhe der zweiten Ebene (42) erstreckt und/oder wobei sich ein Abschnitt jedes Zwischenteilabschnitts der Nutabschnitte (38) auf Höhe der ersten Ebene (40) erstreckt.

7. Plattenwärmetauscher (10) nach einem der vorstehenden Ansprüche, wobei die oberen Abschnitte der Rippen (36) in der ersten Ebene (40) breiter sind als die unteren Abschnitte der Nutabschnitte (38) in der zweiten Ebene (42) oder die unteren Abschnitte der Nutabschnitte (38) in der zweiten Ebene (42) breiter sind als die oberen Abschnitte der Rippen (36) in der ersten Ebene (40).

8. Plattenwärmetauscher (10) nach einem der vorstehenden Ansprüche, wobei im ersten Endabschnitt (20) die erste und die zweite Wärmeübertragungsplatte (1', 1") durch eine erste Reihe von Verbindungen verbunden sind, die zumindest teilweise umlaufend um die mindestens eine Öffnung (26, 32) des ersten Endabschnitts (20) angeordnet sind, wobei

im zweiten Endabschnitt (24) die erste und die zweite Wärmeübertragungsplatte (1', 1") durch eine zweite Reihe von Verbindungen miteinander verbunden sind, die zumindest teilweise umlaufend um die mindestens eine Öffnung (28, 30) des zweiten Endabschnitts (42) angeordnet sind, wobei
das Wärmeübertragungsmuster des Mittelabschnitts (22) unmittelbar neben der ersten und zweiten Verbindungsreihe angeordnet ist und sich zwischen diesen erstreckt.

9. Plattenwärmetauscher (10) nach einem der vorstehenden Ansprüche, wobei die Rippenlinien (46) und die Nutlinien (48) geradlinig verlaufen und wobei sich die Rippenlinien (46) und die Nutlinien (48) in einem oder mehreren Winkel(n) ($\alpha$) innerhalb eines Bereichs von 0 - 90 Grad zur Längsachse (LA) erstrecken.

10. Plattenwärmetauscher (10) nach einem der Ansprüche 1 - 8, wobei sich die Rippenlinien (46) und die Nutlinien (48) in Zickzacklinien erstrecken.

11. Plattenwärmetauscher (10) nach Anspruch 10, wobei die Zwischenteilabschnitte (44) der Rippen (36) und/oder die Zwischenteilabschnitte der Nutabschnitte (38) an Abschnitten der Zickzacklinien angeordnet ist, an denen diese ihre Richtung ändern.

12. Plattenwärmetauscher (10) nach einem der vorstehenden Ansprüche, wobei die dauerhaft verbundenen Wärmeübertragungsplatten (1) durch Verbindungen (50) verbunden sind, die mindestens 50 Gew.-% Metall einer gleichen Art wie das Metall der Wärmeübertragungsplatten (1) umfassen.

**Revendications**

1. Échangeur de chaleur à plaques (10) comprenant un ensemble de plaques (4) constitué de plaques de transfert de chaleur (1) jointes de façon permanente, dans lequel

chacune d'une première plaque de transfert de chaleur (1') et d'une deuxième plaque de transfert de chaleur (1") adjacente de l'ensemble de plaques (4) comprend une première extrémité (20), une partie centrale (22) et une seconde extrémité (24) agencées successivement le long d'un axe longitudinal (LA) de la première plaque de transfert de chaleur respective (1), la première partie d'extrémité (20) étant munie d'au moins une orifice (26, 32), la seconde partie d'extrémité (24) étant munie d'au moins un orifice (28, 30), et la partie centrale (22) comprenant une zone de transfert de chaleur (34) dotée d'un motif de transfert de chaleur, dans lequel le motif de transfert de chaleur comprend des crêtes (36) et des parties de rainure (38), des parties supérieures des crêtes (36) s'étendant dans un premier plan (40) et les parties inférieures des parties de rainure (38) s'étendant dans un second plan (42), lesquels premier et second plans (40, 42) étant parallèles entre eux et formant des limites extérieures du motif de transfert de chaleur dans une direction perpendiculaire à l'axe longitudinal (LA), dans lequel

les crêtes (36) sont interrompues par des sections intermédiaires (44) s'étendant à un niveau différent de celui du premier plan (40) et/ou les parties de rainure (38) sont interrompues par des sections intermédiaires s'étendant à un niveau différent du second plan (42), et dans lequel les crêtes (36) s'étendent le long d'un certain nombre de lignes de crête (46) et les parties de rainure (38) s'étendent le long d'un certain nombre de lignes de rainure (48), les lignes de crête (46) et les lignes de rainure (48) étant agencées alternativement et s'étendant parallèlement,

dans lequel dans la zone de transfert de chaleur (34), la première plaque de transfert de chaleur (1') est jointe de manière permanente à la deuxième plaque de transfert de chaleur (1") par un certain nombre de jonctions (50) le long des lignes de crête (46) de la première plaque de transfert de chaleur (1') et des lignes de rainure (48) de la deuxième plaque de transfert de chaleur (1"), l'échangeur de chaleur à plaques étant **caractérisé en ce que**

pour chaque jonction (50) parmi les 50 jonctions, le quotient entre une circonférence O de la jonction (50) et une aire A de la jonction (50) est $O/A \geq 2,6$ mm$^{-1}$,

2. Échangeur de chaleur à plaques (10) selon la revendication 1, dans lequel chaque jonction (50) du nombre de jonctions (50) présente une longueur, L, le long des lignes de crête (46) de la première plaque de transfert de chaleur (1') et des lignes de rainure (48) de la second plaque de transfert de chaleur (1"), laquelle longueur, L, est plus longue qu'une largeur, W, de chaque jonction (50) à travers les lignes de crête (46) de la première plaque de transfert de chaleur (1') et les lignes de rainure (48) de la second plaque de transfert de chaleur (1").

3. Échangeur de chaleur à plaques (10) selon la revendication 1 ou 2, dans lequel chaque jonction (50) du nombre de jonctions (50) présente une largeur, W, à travers les lignes de crête (46) de la première plaque de transfert de chaleur (1') et les lignes de rainure (48) de la deuxième plaque de transfert de chaleur (1"), laquelle largeur, W, est dans une plage de $0,4 \leq W \leq 0,8$ mm.

4. Échangeur de chaleur à plaques (10) selon l'une quelconque des revendications précédentes, dans lequel, dans la zone de transfert de chaleur (34), la première plaque de transfert de chaleur (1') est jointe de manière permanente à la deuxième plaque de transfert de chaleur (1") uniquement le long des lignes de crête (46) de la première plaque de transfert de chaleur (1') et des lignes de rainure (48) de la deuxième plaque de transfert de chaleur (1").

5. Échangeur de chaleur à plaques (10) selon l'une quelconque des revendications précédentes, dans lequel la première et la deuxième plaque de transfert de chaleur (1', 1") sont de même nature, et dans lequel, dans l'ensemble de plaques (4), la deuxième plaque de transfert de chaleur (1") est tournée parallèlement aux premier et second plans à 180 degrés par rapport à la première plaque de transfert de chaleur (1').

6. Échangeur de chaleur à plaques (10) selon l'une quelconque des revendications précédentes, dans lequel une partie de chaque section intermédiaire (44) des crêtes (36) s'étend à un niveau du second plan (42), et/ou dans lequel une partie de chaque section intermédiaire des parties de rainure (38) s'étend à un niveau du premier plan (40).

7. Échangeur de chaleur à plaques (10) selon l'une quelconque des revendications précédentes, dans lequel les parties supérieures des crêtes (36) sont plus larges dans le premier plan (40) que les parties inférieures des rainures (38) ne le sont dans le second plan (42), ou les parties inférieures des rainures (38) sont plus larges dans le second plan (42) que les parties supérieures des crêtes (36) ne le sont dans le premier plan (40).

8. Échangeur de chaleur à plaques (10) selon l'une quelconque des revendications précédentes, dans lequel, dans la première partie d'extrémité (20), la première et la deuxième plaque de transfert de chaleur (1', 1") sont assemblées par une première série de jonctions agencées au moins partiellement circonférentiellement autour du au moins un orifice (26, 32) de la première partie d'extrémité (20), dans lequel

dans la seconde partie d'extrémité (24), les première et deuxième plaques de transfert de chaleur (1', 1") sont jointes par une seconde série de jonctions agencés au moins partiellement de manière circonférentielle autour du au moins un orifice (28, 30) de la seconde partie d'extrémité (42), et dans lequel le motif de transfert de chaleur de la partie centrale (22) est agencé immédiatement adjacent à et s'étendant entre les première et seconde séries de jonctions.

9. Échangeur de chaleur à plaques (10) selon l'une quelconque des revendications précédentes, dans lequel les crêtes (46) et les rainures (48) s'étendent le long de lignes droites, et dans lequel les lignes de crête (46) et les lignes de rainure (48) s'étendent au niveau d'un ou plusieurs angles (α) dans une plage de 0 à 90 degrés par rapport à l'axe longitudinal (LA).

10. Échangeur de chaleur à plaques (10) selon l'une quelconque des revendications 1-8, dans lequel les lignes de crête (46) et les lignes de rainure (48) s'étendent le long de lignes en zigzag.

11. Échangeur de chaleur à plaques (10) selon la revendication 10, dans lequel les sections intermédiaires (44) des crêtes (36) et/ou les sections intermédiaires des parties de rainure (38) sont agencées au niveau de parties des lignes en zigzag au niveau desquelles elles changent de direction.

12. Échangeur de chaleur à plaques (10) selon l'une quelconque des revendications précédentes, dans lequel les plaques de transfert de chaleur (1) jointes de façon permanente sont jointes par des jonctions (50) comprenant au moins 50 % en poids de métal du même type qu'un métal des plaques de transfert de chaleur (1).

Fig. 1a

Fig. 1b

**Fig. 2a**

**Fig. 2b**

**Fig. 3a**

**Fig. 3b**

**Fig. 4**

Fig. 5a

Fig. 5b

Fig. 6

**EP 4 544 251 B1**

REFERENCES CITED IN THE DESCRIPTION

**Patent documents cited in the description**

- KR 200437768 Y
- WO 2011162659 A
- US 4915165 A
- WO 2013144211 A